# EUROPEAN PATENT SPECIFICATION

(11) **EP 2 536 176 B1**
(45) Date of publication and mention of the grant of the patent: **21.09.2016**
(21) Application number: 11305751.7
(22) Date of filing: 16.06.2011
(51) Int. Cl.: H04W 4/18

(54) **Text-to-speech injection apparatus for telecommunication system**
Text-zu-Sprache-Eingabevorrichtung für Telekommunikationssystem
Appareil d'injection texte-voix pour système de télécommunications

(43) Date of publication of application: 19.12.2012
(73) Proprietor: ALCATEL LUCENT, 92100 Boulogne-Billancourt (FR)
(72) Inventor: Moons, Jan, 2220 Heist-Op-Den-Berg (BE); Lou, Zhe, 2650 Edegem (BE)
(74) Representative: ALU Antw Patent Attorneys

(56) References cited:
- EP-A1- 1 571 809
- WO-A1-03/021900
- GB-A- 2 413 038
- US-A1- 2007 025 529
- US-A1- 2007 155 346
- US-A1- 2007 254 684

## Description

The present invention relates to a text-to-speech injection apparatus adapted to receive a text message from a first user device, to translate said text message into a speech message and to transmit said speech message to at least one second user device via a telecommunication network, a voice conversation being already established between said first and said second user device via said telecommunication network, and said text-to-speech injection apparatus comprising a text-to-speech translation module adapted to receive said text message from the first user device and to translate said text message into said speech message.

Today, sending a text message, such as the generally known Short Message Service SMS, is current practice.

Sending a text message in such a way that the text message is turned into a speech message and can be heard in the second user device is already less current. This may however be useful for instance when the user of the first user device is in a noisy environment or in an environment where it is socially not acceptable to make a phone call to the second user device, like on busses, trains, etc.

Even more useful would be to send a speech or voice message to the second user while the first user is already in a call conversation with this second user, or with a group of second users when in a conference call.

Today, no apparatus is able to turn a text message into a speech or voice message while running a telephone call or conversation between the same two users, or even to more users in case of a conference call. Users are having voice conversations or using texting, but there exists no solution that turns text messages into voice messages during an ongoing phone call, while such voice messages do not interfere with the ongoing phone call.

An object of the present invention is to provide a text-to-speech injection apparatus wherein, while being in a phone conversation or conference call, a first user can use text messaging and text-to-speech technologies to communicate with at least a second user in a natural way, e.g. when it is not possible for the first user to use voice.

According to a characterizing embodiment of the invention, this object is achieved due to the fact that said text-to-speech injection apparatus further comprises a voice message injector module adapted to receive said speech message from said text-to-speech translation module, to analyze the ongoing voice conversation between said first and said second user device for detecting periods of silence in said ongoing voice conversation, and to inject said speech message into said voice conversation during said periods of silence.

In this way, the user of the first user device can use text messaging or texting, e.g., to respond to the user of the second user device who will receive the text message as a voice message, so that both users can simultaneously use a regular phone communication since the text message is transformed into a voice message.

Owing to the present text-to-speech injection apparatus, people who are only able to listen in on the phone call and cannot use their voice to take part in the phone call can use texting to express their opinion.

On the other hand, the one or more second users or receiving parties don't need to have texting capabilities to read the response owing to the text-to-speech translation module that translates the text message into audio as if it were a regular voice conversation, and to the voice message injector module that injects the translated text message at a suitable predetermined moment.

It is to be noted that the United States Patent Application US 20070155346 A1 (5 July 2007) of Vladimir Mijatovic et al and entitled "Transcoding method in a mobile communications system" discloses a method that allows a user of a Push-to-talk over Cellular PoC system to select more flexibly the mode of transmitting. The user of a PoC terminal (UE1) is thereby able to send text during an ongoing PoC session to a PoC server (PS) which transcodes the text into speech before transmitting it to the other participants (UE2) of the PoC session. Additionally, the method allows a speech-to-text transcoding act, for example, in order to add subtitles to a video clip that is shown during a video-PoC session. Further, the method allows speech-to-speech transcoding in order to replace the sender's own speech with another speech or voice during a PoC session. In addition to the text-to-speech, speech-to-text and/or speech-to-speech transcoding, the PoC server (PS) may be arranged to translate the received data into another language and to send the translated data to the recipients or back to the sender.

It is also to be noted that the UK Patent Application GB 2 413 038 A (12 October 2005) of VODAFONE Limited and entitled "A method of controlling transmission of data during communication sessions" discloses a method and system of controlling a Push-to-Talk over cellular (PoC) communication session between a first mobile device (1A) and a second mobile device (1B), each of which is associated with a communications network (7A, 7B). A communication link is initiated between the first device and the second device for transmitting speech data front the first device to the second device. It is possible for the user of first device to enter data in the form of text (or other non-audio/inaudible form). This text data are transmitted to PoC server (13A). A text to speech converter (19A) then converts this text data into speech or voice data. Transcoder (25A) may convert the speech or voice data using a particular CODEC suitable for allowing the speech or voice data to be reproduced on the second device (1 B). The speech or voice data is then transmitted from the PoC server (13A) to the second device where it is reproduced as audible speech. The communication could also be between a group of devices. Finally, a method of controlling IP-based communication between a plurality of devices is also shown.

However, the advantageous features of the present invention are not disclosed nor suggested in any of these known documents.

Another characterizing embodiment of the present invention is that said text-to-speech injection apparatus further comprises a texting module adapted to send said text message from the first user device to said text-to-speech translation module.

Although the Short Message Service SMS, generally available in a mobile phone, may be used to this end, it is sometimes preferred to have a dedicated texting module. The dedicated texting module offers more possibilities, e.g. that the other party is able to type a response, or to transform into speech already completed words or completed sentences of the conversation, so that the other parties don't have to wait until the send button is clicked, and/or replaces an SMS system when the latter is not available in the first user device.

Also another characterizing embodiment of the present invention is that said voice message injector module is adapted to inject said speech message in a same audio channel as said voice conversation.

The audio connection used by the voice conversation is thus also used to send the text message, instead of using a separate texting channel. Because the users are already connected through the voice conversation channel, this has the advantage of not requiring an extra channel for transmitting the speech message.

In a preferred characterizing embodiment of the present invention, at least said first user device is a mobile phone module.

The mobile phone module may be a simple mobile telephone up to any tablet that can be used as a mobile phone, but of which the main functionality rather is to be a portable computer.

Further characterizing embodiments of the present text-to-speech injection apparatus are mentioned in the appended claims.

It is to be noticed that the terms "comprising" or "including", used in the claims, should not be interpreted as being restricted to the means listed thereafter. Thus, the scope of an expression such as "a device comprising means A and B" should not be limited to an embodiment of a device consisting only of the means A and B. It means that, with respect to embodiments of the present invention, A and B are essential means of the device.

Similarly, it is to be noticed that the term "coupled", also used in the claims, should not be interpreted as being restricted to direct connections only. Thus, the scope of the expression such as "a device A coupled to a device B" should not be limited to embodiments of a device wherein an output of device A is directly connected to an input of device B. It means that there may exist a path between an output of A and an input of B, which path may include other devices or means.

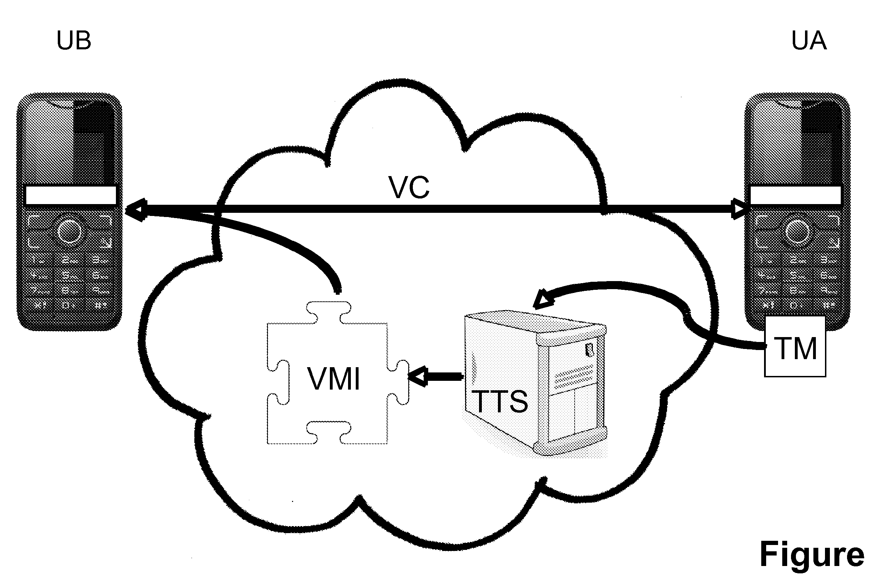

The above and other objects and features of the invention will become more apparent and the invention itself will be best understood by referring to the following description of an embodiment taken in conjunction with the accompanying drawings wherein the single Figure represents a text-to-speech injection apparatus according to the invention.

The text-to-speech injection apparatus represented at the Figure is used for sending a text message during a telephone call in such a way that the message is turned into speech and can be heard by one or more - in case of a conference call - other parties.

In more detail, the text-to-speech injection apparatus is associated to a voice conversation already established on an audio connection or channel through a telecommunication network NT between the user of a first user device UA and the user of a second user device UB.

During this voice conversation, the user device UA can send a text message into the telecommunication network NT to a text-to-speech translation module TTS.

The text-to-speech translation module or server TTS, located in the telecommunication network NT, is responsible for capturing the text message and for transforming or translating this text message of the sending party or first user device UA into a speech or voice message.

The so created voice message is then transmitted to a Voice Message Injector module VMI also located in the telecommunication network NT. The voice message injector module VMI analyzes the ongoing voice conversation between the user device UA and the user device UB and looks for an ideal or suitable moment for voice insertion into this telephone call.

At such a suitable moment during the telephone call, e.g. when a period of silence is detected, the voice message injector module VMI injects the speech message into the same audio channel as the voice conversation VC so that the user of the user device UB can "hear" the former text message created by the user of the user device UA.

It is to be noted that at least the first user device UA is preferably a mobile phone module, such as a mobile telephone or a tablet. The user device UA can then send the text message to the text-to-speech translation module TTS via a generally known Short Message Service SMS, which is often available in mobile phones.

However, when such an SMS service is not available, e.g. when the user device UA is not a mobile phone, this service can be advantageously replaced by a dedicated texting module TM. The dedicated texting module TM is preferably located in the user device UA and allows offering more possibilities then an existing SMS service.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A text-to-speech injection apparatus (TM, TTS, VMI) adapted to receive a text message from a first user device (UA), to translate said text message into a speech message and to transmit said speech message to at least one second user device (UB) via a telecommunication network (NT), a voice conversation (VC) being already established between said first (UA) and said second (UB) user device via said telecommunication network (NT), and said text-to-speech injection apparatus (TM, TTS, VMI) comprising a text-to-speech translation module (TTS) adapted to receive said text message from the first user device (UA) and to translate said text message into said speech message,
***characterized in that*** said text-to-speech injection apparatus (TM, TTS, VMI) further comprises a voice message injector module (VMI) adapted to receive said speech message from said text-to-speech translation module (TTS), to analyze the ongoing voice conversation (VC) between said first (UA) and said second (UB) user device for detecting periods of silence, and to inject said speech message into said voice conversation (VC) during said periods of silence.

2. The text-to-speech injection apparatus according to claim 1, ***characterized in that*** said text-to-speech injection apparatus (TM, TTS, VMI) further comprises a texting module (TM) adapted to send said text message from the first user device (UA) to said text-to-speech translation module (TTS).

3. The text-to-speech injection apparatus according to claim **1, *characterized in that*** said voice message injector module (VMI) is adapted to inject said speech message in a same audio channel as said voice conversation (VC).

4. The text-to-speech injection apparatus according to claim **1**, ***characterized in that*** said first user device (UA) is a mobile phone module.

5. The text-to-speech injection apparatus according to claim **1, *characterized in that*** said text-to-speech translation module (TTS) and said voice message injector module (VMI) are located in said telecommunication network (NT).

6. The text-to-speech injection apparatus according to claim **2, *characterized in that*** said texting module (TM) is located in said first user device (UA).

## Patentansprüche

1. Eine Text-in-Sprache-Einspeiseeinrichtung (TM, TTS, VMI), ausgelegt zum Empfangen einer Textnachricht von einem ersten Benutzerendgerät (UA), zum Übersetzen besagter Nachricht in eine Sprachnachricht und zum Übertragen besagter Sprachnachricht auf mindestens ein zweites Benutzerendgerät (UB) mittels eines Telekommunikationsnetzwerks (NT), wobei eine Sprachkonversation (VC) schon zwischen besagtem ersten (UA) und besagtem zweiten (UB) Benutzerendgerät mittels besagtem Kommunikationsnetzwerk (NT) hergestellt worden ist, und besagte Text-in-Sprache-Einspeiseeinrichtung (TM, TTS, VMI) ein Text-in-Sprache-Übersetzungsmodul (TTS) umfasst, das ausgelegt ist zum Empfangen besagter Textnachricht vom ersten Benutzerendgerät (UA) und zum Übersetzen besagter Textnachricht in besagte Sprachnachricht,
***dadurch gekennzeichnet, dass*** besagte Text-in-Sprache-Einspeiseeinrichtung (TM, TTS, VMI) weiterhin ein Sprachnachricht-Einspeisemodul (VMI) umfasst, das ausgelegt ist zum Empfangen besagter Sprachnachricht von besagtem Text-in-Sprache-Übersetzungsmodul (TTS) zum Analysieren der laufenden Sprachkonversation (VC) zwischen besagtem ersten (UA) und besagtem zweiten (UB) Benutzerendgerät zum Erkennen von Stillezeiträumen und zum Einspeisen besagter Sprachnachricht in besagte Sprachkonversation (VC) während besagter Stillezeiträume.

2. Text-in-Sprache-Einspeiseeinrichtung nach Anspruch 1, ***dadurch gekennzeichnet, dass*** besagte Text-in-Sprache-Einspeiseeinrichtung (TM, TTS, VMI) weiterhin umfasst ein Texterstellungsmodul (TM), das ausgelegt ist zum Senden besagter Textnachricht vom ersten Benutzerendgerät (UA) zu besagtem Text-in-Sprache-Übersetzungsmodul (TTS).

3. Text-in-Sprache-Einspeiseeinrichtung nach Anspruch 1, ***dadurch gekennzeichnet, dass*** besagtes Sprachnachrichteinspeisemodul (VMI) ausgelegt ist zum Einspeisen von besagter Sprachnachricht in denselben Audiokanal wie besagte Sprachkonversation (VC).

4. Text-in-Sprache-Einspeiseeinrichtung nach Anspruch 1, ***dadurch gekennzeichnet, dass*** besagtes erstes Benutzerendgerät (UA) ein Mobiltelefonmodul ist.

5. Text-in-Sprache-Einspeiseeinrichtung nach Anspruch 1, ***dadurch gekennzeichnet, dass*** besagtes Text-in-Sprache-Übersetzungsmodul (TTS) und besagtes Sprachnachrichteinspeisemodul (VMI) sich in besagtem Telekommunikationsnetzwerk (NT) befinden.

6. Text-in-Sprache-Einspeiseeinrichtung nach Anspruch 2, ***dadurch gekennzeichnet, dass*** sich besagtes Texterstellungsmodul (TM) in besagtem ersten Benutzerendgerät (UA) befindet.

## Revendications

1. Appareil d'injection de synthèse vocale de texte (TM, TTS, VMI) adapté pour recevoir un message texte d'un premier dispositif utilisateur (UA), destiné à traduire ledit message texte en un message vocal et à transmettre ledit message vocal à au moins un deuxième dispositif utilisateur (UB) via un réseau de télécommunications (NT), une communication vocale (VC) étant déjà établie entre ledit premier (UA) et ledit deuxième (UB) dispositifs utilisateur via ledit réseau de télécommunications (NT), et ledit appareil d'injection de synthèse vocale de texte (TM, TTS, VMI) comprenant un module de traduction texte-parole (TTS) adapté pour recevoir ledit message texte en provenance du premier dispositif utilisateur (UA) et pour traduire ledit message texte en ledit message vocal,
**caractérisé en ce que** ledit appareil d'injection de synthèse vocale de texte (TM, TTS, VMI) comprend en outre un module d'injection de message vocal (VMI) adapté pour recevoir ledit message vocal provenant dudit module de traduction texte-parole (TTS), pour analyser la communication vocale (VC) en cours entre ledit premier (UA) et ledit deuxième (UB) dispositifs utilisateur afin de détecter les périodes de silence, et pour injecter ledit message vocal dans ladite communication vocale (VC) pendant lesdites périodes de silence.

2. Appareil d'injection de synthèse vocale de texte selon la revendication 1, **caractérisé en ce que** ledit appareil d'injection de synthèse vocale de texte (TM, TTS, VMI) comprend en outre un module d'envoi de messages textes (TM) adapté pour envoyer ledit message texte du premier dispositif utilisateur (UA) audit module de traduction texte-parole (TTS).

3. Appareil d'injection de synthèse vocale de texte selon la revendication 1, **caractérisé en ce que** ledit module d'injection de message vocal (VMI) est adapté pour injecter ledit message vocal dans le même canal audio que ladite communication vocale (VC).

4. Appareil d'injection de synthèse vocale de texte selon la revendication 1, **caractérisé en ce que** ledit premier dispositif utilisateur (UA) est un module de téléphone mobile.

5. Appareil d'injection de synthèse vocale de texte selon la revendication 1, **caractérisé en ce que** ledit module de traduction texte-parole (TTS) et ledit module d'injection de message vocal (VMI) sont situés dans ledit réseau de télécommunications (NT).

6. Appareil d'injection de synthèse vocale de texte selon la revendication 2, **caractérisé en ce que** ledit module d'envoi de messages texte (TM) est situé dans ledit premier dispositif utilisateur (UA).
